# EUROPEAN PATENT APPLICATION

(11) **EP 4 534 726 A1**
(43) Date of publication of application: **09.04.2025**
(21) Application number: 23201743.4
(22) Date of filing: 05.10.2023
(51) Int. Cl.: C25B 1/04, C25B 9/05, C25B 9/19, C25B 9/60, C25B 9/73, C25B 9/77

(54) **TIGHTENING APPARATUS, ELECTROLYSER, METHOD OF CLOSING/OPEMING ADJACENT ELECTROLYSIS CELLS, METHOD OF RETROACTIVELY APPLYING TIGHTENING APPARATUS**

(71) Applicant: thyssenkrupp nucera AG & Co. KGaA, 44141 Dortmund (DE)
(72) Inventor: Hamada, Tsuyoshi, Okayama, 706-0134 (JP); Kawanishi, Koji, Okayama, 706-0134 (JP); Iguchi, Yukinori, Okayama, 706-0134 (JP); Tanaka, Masato, Okayama, 706-0134 (JP)
(74) Representative: Meissner Bolte Partnerschaft mbB

(57) **Abstract**

The present invention relates to a tightening apparatus for selectively opening and closing respective adjacent electrolysis cells in an electrolyser. The tightening apparatus comprises: a movable member moveable in a first direction and a second direction, the first direction being a direction in which the cells are closed each other and the second direction being an opposite direction to the first direction; at least one main actuator configured to move the movable member selectively in the first and second directions; a pressure plate arranged on the first direction side with respect to the movable member; and a sub-actuator configured to move the pressure plate selectively in the first and second directions with respect to the moveable member.

## Description

### Technical Field

The invention relates to a tightening apparatus for selectively opening and closing adjacent electrolysis cells arranged in series in an electrolyser. The invention also relates to an electrolyser comprising a plurality of electrolysis cells arranged in series and such a tightening apparatus. The invention further relates to a method of closing/opening the adjacent electrolysis cells using the tightening apparatus. Furthermore, the invention relates to a method of retroactively applying the tightening apparatus to an existing filter press type electrolyser.

### Background

In recent years, there has been a significant increase in interest in using hydrogen as a secondary energy carrier. Among other things, this increased interest is based on the advantages of hydrogen: Hydrogen can be easily produced from water using renewable primary energy, hydrogen is a non-toxic material with a relatively high mass-related energy density, and the chemical energy stored in hydrogen can be easily converted back into electrical energy without releasing significant amounts of carbon dioxide or other greenhouse gases. In addition, hydrogen can also be used as an educt in various chemical processes. One important way of producing hydrogen is by electrolysis of water using an electrolysis cell that comprises a cathode compartment and an anode compartment. In this process hydrogen is generated in the cathode compartment of the electrolysis cell from alkaline aqueous solution, from acidic aqueous solution, or from neutral aqueous solution. The cathode compartment and the anode compartment are typically separated from each other by a separator such as a membrane or diaphragm. In many applications, alkaline water electrolysis in particular has proved to be a most promising process.

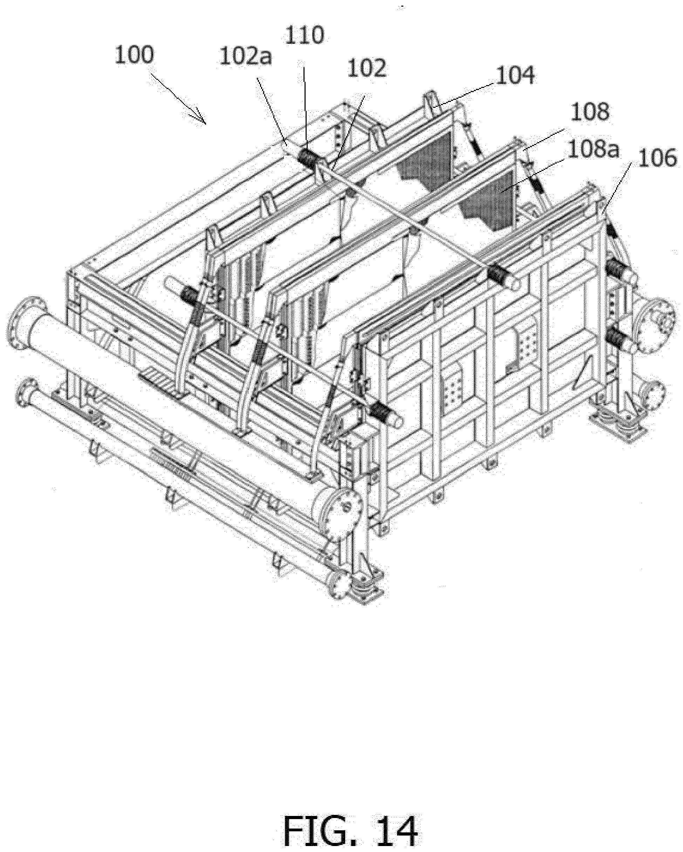

Electrolysers for such a process are known comprising a plurality of electrolysis unit cells (referred to simply as "cells" or "elements") arranged in series. Each cell defines an anode chamber and a cathode chamber, which are physically divided by a partition wall within the cell. Separators, such as ion exchange membranes or diaphragms, are arranged between the respective adjacent cells to electrochemically separate the anode chamber and the cathode chamber from each other. In order to establish a seal between the adjacent cells, gaskets or the like are arranged on the opposite sides of each cell, and the cells are tightened against each other in the cell stacking direction with aid of a tightening apparatus according to a filter press technology. A particular electrolyser of the filter press type is described in EP 0505899 A1, wherein a plurality of unit cells are stacked in series through a cation exchange membrane disposed between respective adjacent unit cells. Currently, either a tie-rod tightening system or hydraulic tightening system is available. As shown in FIG. 14, the tie-rod tightening system 100 comprises a plurality of tie rods 102 extends between a pressure plate 104 and a support plate 106 at both ends of the electrolysers and over a plurality of unit cells 108 each having a membrane 108a, and tightening nuts 102a attached to the both ends of the tie rods 102. Belleville springs or washer springs 110 are also provided between the outer walls of the pressure/support plates 104, 106 and the tightening nuts 102a.

EP4137610 A1 discloses an oil pressure tightening device comprising an oil pressure cylinder, a shut-off valve, a relief valve, an oil tank and a pump. JP 2021195596 A teaches that stack pressure for bipolar electrolysis elements is controlled by a hydraulic control mechanism.

These conventional systems have drawbacks. The tie-rod tightening systems as shown in FIG. 14, due to the long tie-rods, require significant labour for manual tightening. The hydraulic tightening systems require a large cylinder with a sufficient extension length to successfully cope with a reduced number of cells. For example, if the number of cells is reduced to meet production targets or other requirements, the pressure plate needs to be pushed out farther. This not only requires more installation space for the long cylinder, but also leads to higher costs. Also, continuous compression by the hydraulic cylinder is necessary. Further, a hydraulic accumulator should be installed in case of inability to maintain the pressure in the cylinder due to a power failure or the like.

Therefore, it is the task of the present invention to eliminate one or more of the above disadvantages.

### Summary

According to the present invention, a tightening apparatus for selectively opening and closing respective adjacent electrolysis cells arranged in series in an electrolyser is provided. The tightening apparatus comprises: a movable member moveable in a first direction and a second direction, the first direction being a direction in which the cells are to be closed each other and the second direction being an opposite direction to the first direction; at least one main actuator configured to move the movable member selectively in the first and second directions; a pressure plate arranged on the first direction side with respect to the movable member; and a sub-actuator configured to move the pressure plate selectively in the first and second directions with respect to the moveable member.

Two-step movements of the pressure plate by means of the sub-actuator and the main actuator(s) enables the compression of the respective adjacent cells by the main actuator, whilst avoiding a significant increase in size of the electrolyser, compared to a conventional, single-stage hydraulic actuator system. Moreover, the invented tightening apparatus significantly reduces the labour load compared to the conventional tie-rod tightening system.

The present invention also provides an electrolyser comprising: a plurality of electrolysis cells arranged in series; and the invented tightening apparatus, which is configured to apply pressure between the respective adjacent electrolysis cells.

Further, the present invention provides a method of closing respective adjacent electrolysis cells in an electrolyser, using the invented tightening apparatus. The method comprises: moving the pressure plate in the first direction using the sub actuator; and moving the movable member in the first direction using the at least one main actuator.

Further, the present invention provides a method of opening adjacent electrolysis cells in an electrolyser, using the invented tightening apparatus. The method comprises: interconnecting the pressure plate and at least one electrolysis cell with each other; moving the movable member in the second direction along with the pressure plate using the at least one main actuator; and moving the pressure plate in the second direction and towards the movable member using the sub-actuator.

Furthermore, the present invention provides a method of retroactively applying the invented tightening apparatus to an existing filter press type electrolyser that comprises an existing frame and an existing pressure plate. The method comprises: extending the frame; and mounting a main body of the at least one main actuator on the extended frame section.

Further embodiments are given in the dependent claims.

### Brief Description of the Drawings

FIG. 1 shows part of a bipolar electrolyser comprising a plurality of electrolysis cells;
FIG. 2 shows a schematic diagram of a tightening apparatus in planer view according to the present invention;
FIGS. 3A and 3B show an exemplary transmission means;
FIGS. 4A and 4B show another exemplary transmission means;
FIG. 5 shows a comparison between a conventional hydraulic tightening apparatus and the tightening apparatus according to the present invention;
FIGS. 6-9 and FIG. 2 show cell "close" procedures using the tightening apparatus according to the present invention;
FIGS. 10-13 show cell "partially open" procedures using the tightening apparatus according to the present invention; and
FIG. 14 shows an electrolyser having a conventional tie-rods tightening system.

### Detailed Description

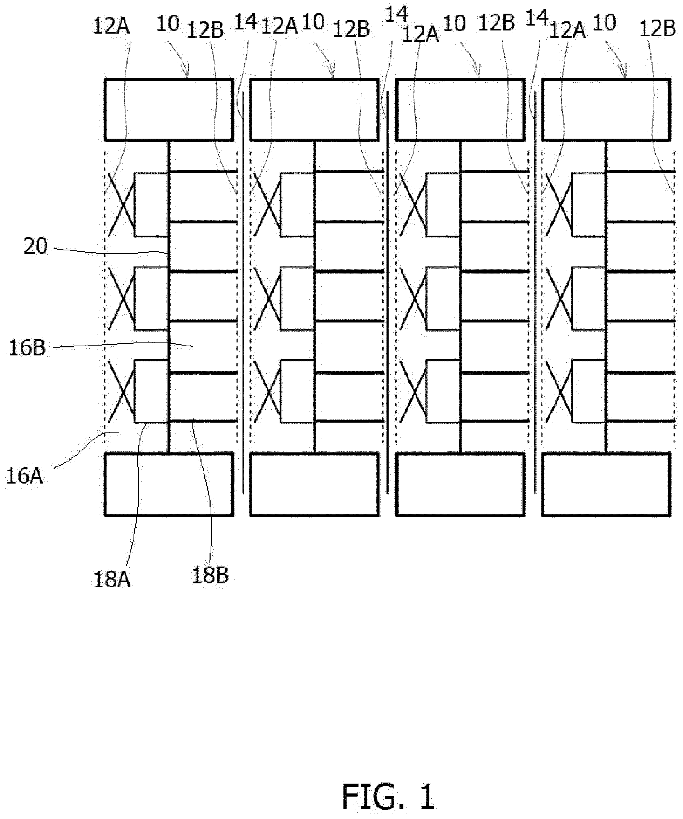

One exemplary electrolyser to which the invented tightening apparatus may be applied is a bipolar electrolyser, such as ion-exchange membrane process electrolyser, in which a plurality of bipolar electrolysis cells are arranged in series, with an ion exchange membrane or diaphragm as a gas separator being interposed between the respective adjacent cells (FIG. 1). The filter press technology is utilized to join the adjacent cells so that there is substantially no gap between electrode elements on both sides of the separator. However, the electrolyser may be a monopolar electrolyser in which each cell has either a cathode or anode electrode element on the side (not shown).

The electrolyser in which the invented tightening apparatus is applied may be used for Chlor-Alkali electrolysis. In another example, the electrolyser may be used for alkaline water electrolysis (AWE). More generally, the electrolyser may be applicable to any electrolysis process using a plurality of unit cells arranged in series, with an electrochemical separator being interposed between the respective adjacent unit cells.

An electrochemical electrode structure may be defined as comprising a current collector and at least one electrode element, the at least one electrode element being a two-dimensionally extended electrically conductive element having an open structure. The term "current collector" refers to the electrical connection between the active material of the electrode element and an external circuit, which may thus cover electrically conductive part of a rear wall/partition wall of the respective electrolysis cell as well as to any supportive structure protruding therefrom. The "open structure" means a structure having one or more openings penetrating from one side to the other side of the electrode element.

Referring now to FIG. 1, a plurality of electrolysis unit cells 10, which are arranged in series, can be seen. Each cell 10 may comprise a first electrode element 12A (e.g., cathode), a second electrode element 12B (e.g., anode). Gas separators 14 are interposed between the respective adjacent cells 10. The electrolysis cell 10 may further comprise a first compartment 16A, a second compartment 16B and current collectors 18A, 18B. The current collectors 18A, 18B may also be referred as part of electrode structures. The first and second compartments 16A, 16B are physically divided from each other by a rear wall or partition wall 20. The partition wall 20 faces the separators 14 over the first and second compartments 16A, 16B, and define these compartments together with the separators 14.

Each separator 14 has a first surface side and a second surface side, wherein the first surface side contacts the first compartment 16A and the second surface side contacts the second compartment 16B for electrochemically interconnecting the first compartment 16A and the second compartment 16B of the adjacent cells 10. The separator 14 may be ion-exchange membrane. Alternatively, the separator 14 may be porous diaphragm, particularly an ion-permeable diaphragm. Ion-permeable diaphragms do not allow gases generated by the electrochemical reaction to permeate, but have ion-exchange function. The separator 14 may be a polymeric porous membrane, inorganic porous membrane, woven or nonwoven fabrics, or the like. It should be noted that the electrolyser described above is merely an example, and the tightening apparatus of the present invention is applicable to any electrolysers using filter press technology.

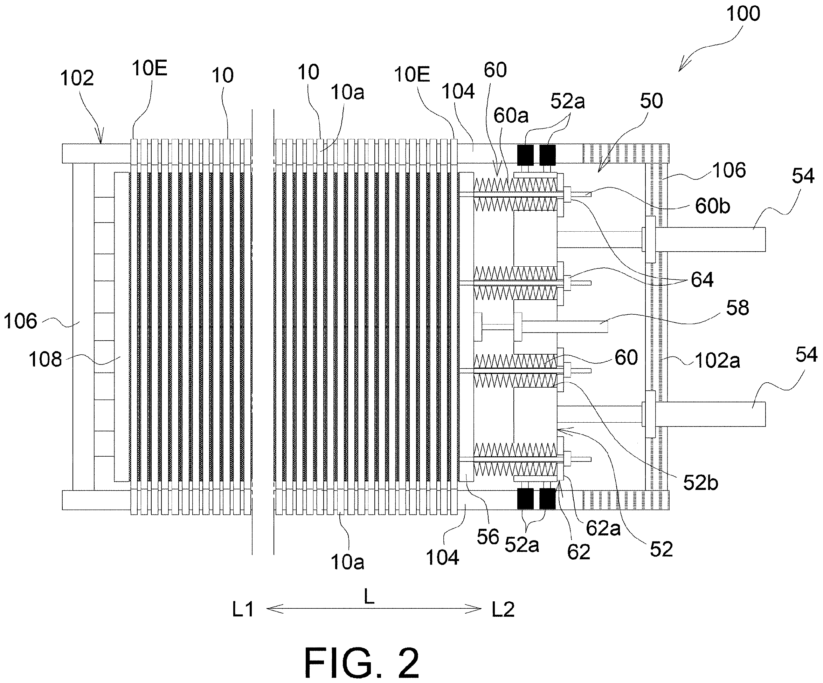

Referring now to FIG. 2, an electrolyser 100 having an exemplary tightening apparatus 50 according to the present invention can be seen in planer view. A plurality of electrolysis cells 10 such as illustrated in FIG. 1 can been seen. These cells 10 are stacked in series, e.g., in the longitudinal direction L of the electrolyser 100.

The electrolyser 100 comprises a frame 102 for supporting the electrolysis cells 10. The frame 102 may include a pair of guide rails 104 extending in the stacking direction L of the cells 10 to support the respective cells 10. In planar view of FIG. 2, it can be seen that the cells 10 are suspended between the pair of guide rails 104. Additional guide means may also be provided.

In the illustrated example, the frame 102 includes four pillars (not shown). Each guide rail 104 spans between the front pillar and the rear pillar in the stacking direction L. Preferably, each cell 10 includes a pair of rolling elements 10a on its sides so that the cell 10 can move or slide on the guide rails 104 with low friction. The guide rails 104 may also support some components of the tightening apparatus 50 as discussed later.

The frame 102 may further include two or more beams or lateral bars 106. The lateral bar 106 on the front side may span between the front pillars. Likewise, the lateral bar 106 on the rear side may span between the rear pillars. A support plate 108 is provided to receive pressure from the terminal cell 10E at the distal end of the electrolyser 100. The support plate 108 is attached to the frame, e.g., the rear bar 106.

In one example, the frame 102 of an existing tie rod tightening system can be reused. This can also be seen from FIG. 2. The front section 102a where a dot pattern is drawn is added to the existing frame. This newly added frame section 102a may also constitute part of the guide rails 104.

The tightening apparatus 50 includes a movable member 52, at least one (two in this example) main actuator 54, a pressure plate 56, and a sub-actuator 58. Preferably, the tightening apparatus 50 further comprise a compressible means 60.

The movable member 52 is arranged between the pressure plate 56 and the at least one main actuator 54. The movable member 52 is configured to move in the first and second directions L1, L2 with an aid of the at least one main actuator 54. The movable member 52 may move or slide on the guide rails 104. In this case, the movable member 52 may include rolling elements 52a on its sides that roll on the guide rails 104. The movable member 52 may have a plurality of openings 52b through which the compressible means 60 extend.

The main actuator 54 is configured to move the movable member 52 selectively in the first and second directions L1, L2. Various actuators, such as hydraulic cylinders, electro-mechanical actuators, pneumatic actuators, are applicable. In this example, a hydraulic cylinder is used as the main actuator 54. The tightening apparatus 50 comprises all necessary equipment for the main actuator(s) 54 and the sub-actuator 58 to work properly. For example, the hydraulic cylinders require a hydraulic circuit that comprises a reservoir, pump, relief valve, 3-way or 4-way directional control valve, connectors, hydraulic lines, controller and the like. The electro-mechanical actuators require electric motors, power supply, transmissions, controller and the like.

The pressure plate 56 is arranged on the first direction L1 side with respect to the movable member 52. The pressure plate 56 is configured to apply pressure against the terminal cell 10E at the proximal end of the electrolyser 100. The pressure plate 56 may additionally be supported and guided by the frame 102.

The sub-actuator 58 is configured to move the pressure plate 56 selectively in the first and second directions L1, L2 with respect to the movable member 52. The first or distal end of the sub-actuator 58 is attached to the pressure plate 56 and the second or proximal end of the sub-actuator 58 is attached to the movable member 52. Various actuators, such as hydraulic cylinders, electro-mechanical actuators, pneumatic actuators, are applicable. In this example, a hydraulic cylinder is used as the sub-actuator 58. Since the main body (i.e., hollow cylinder) of the sub-actuator 58 is attached to the movable member 52, the main body is movable along with the movable member 52. Although two or more sub-actuators 58 may be provided, a single sub-actuator 58 would suffice, because the sub-actuator 58 is not used for tightening the cells 10 as described below, but simply move the pressure plate 56 relative to the movable plate towards the cells 10. Preferably, the inner diameter of the hydraulic cylinder of the sub-actuator 58 is smaller than the inner diameter of the hydraulic cylinder of the main actuator 54. This further reduces the costs of the tightening apparatus 50 of the present invention. Preferably, the sub-actuator 58 is positioned between the two main actuators 54 in planar view. More preferably, the sub-actuator 58 is positioned in equally distant from the two main actuators 54 in planar view.

The compressible means 60 is arranged between the pressure plate 56 and the movable member 52. The compressible means 60 may selectively be activated and deactivated. The compressible means 60, when activated, is compressible by the movable member 52 with an aid of the at least one main actuator 54 so as to accumulate pressure and apply in turn said pressure to the pressure plate 56. The compressible means 60 may comprise a spring, preferably a belleville spring 60a. Each belleville spring 60a is guided by a centre rod 60b. The centre rod 60b extends from the pressure plate 56 in the second direction. The centre rods 60b align with the openings 52b of the movable plate 52 viewed in the direction L. When reusing an existing tie rod tightening system, the compressible means 60 may be placed at the same location where the existing tie rods were located. Preferably, the plurality of compressible means 60 may be distributed substantially evenly around the perimeter of the pressure plate 56. More preferably, one or more compressible means 60 are positioned on the outside near the seals (e.g., gaskets) between the cells 10, viewed in the stacking direction L of the cells 10.

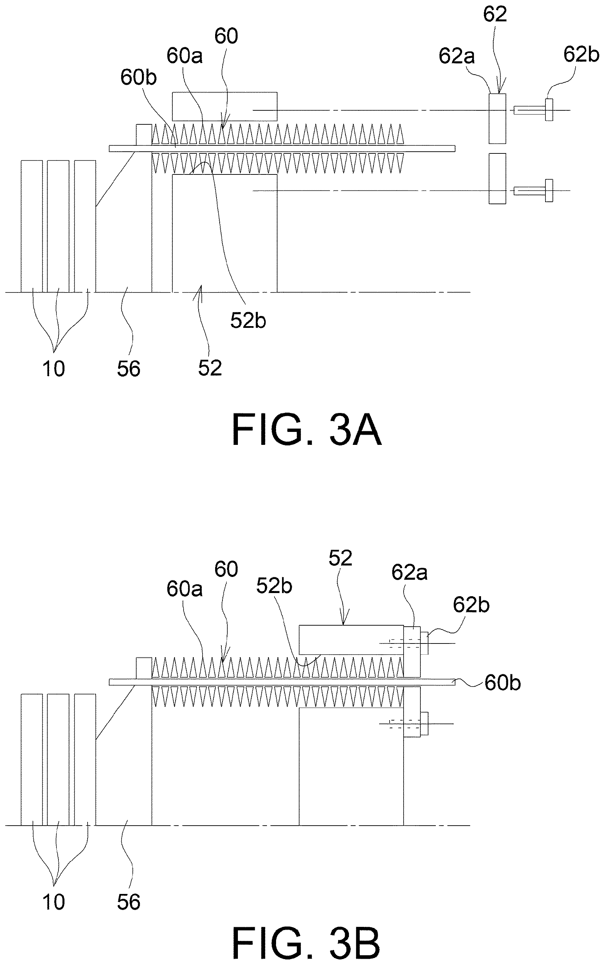

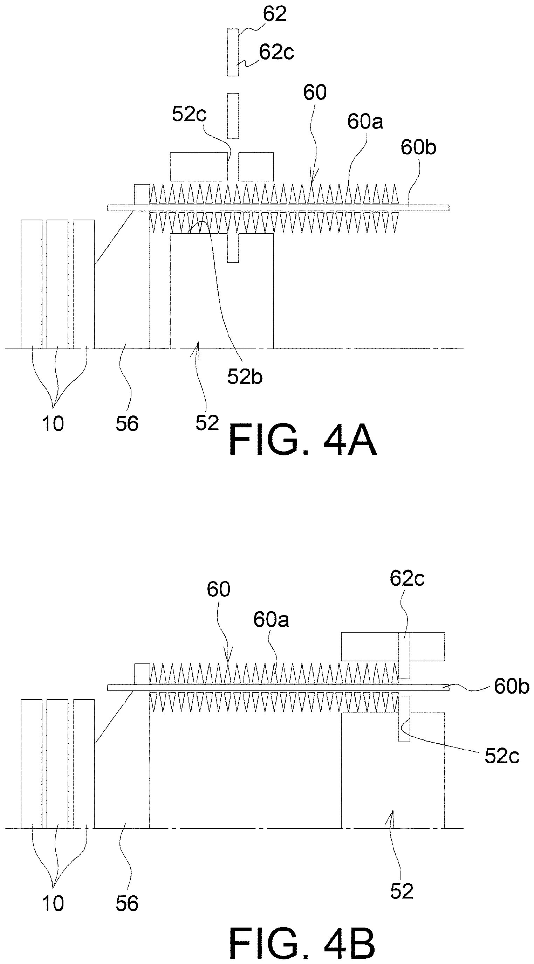

The tightening apparatus 50 may further comprise a transmission means 62. The transmission means 62 is configured to transmit force from the movable member 52 to the compressible means 60. Stated another way, the transmission means 62 selectively activates and deactivates the function of the compressive means 60. Preferably, the transmission means 62 is detachably attached to the movable member 52. In one example, as shown in FIGS. 3A and 3B, the transmission means 62 includes a backing plate 62a secured on the front surface of the movable member 52 by fasteners 62b such as bolts so as to receive the compressible means 60 passing through the openings 52b of the movable member 52. The backing plate 62a include holes through which only the centre rods 60b of the compressible means 60 pass. By releasing the fasteners 62b, the transmission means 62 can be detached from the movable member 52. In another example, as shown in FIGS. 4A and 4B, the transmission means 62 is in the form of an insert plate 62c that can be inserted into a slot 52c formed in the movable member 52. The insert plate 62c also include holes through which only the centre rods 60b of the compressible means 60 pass. Although not shown, the transmission means 62 is not limited to the form of plate, but may have any structure that can withstand the load form the compressible means 60 and the main actuators 54.

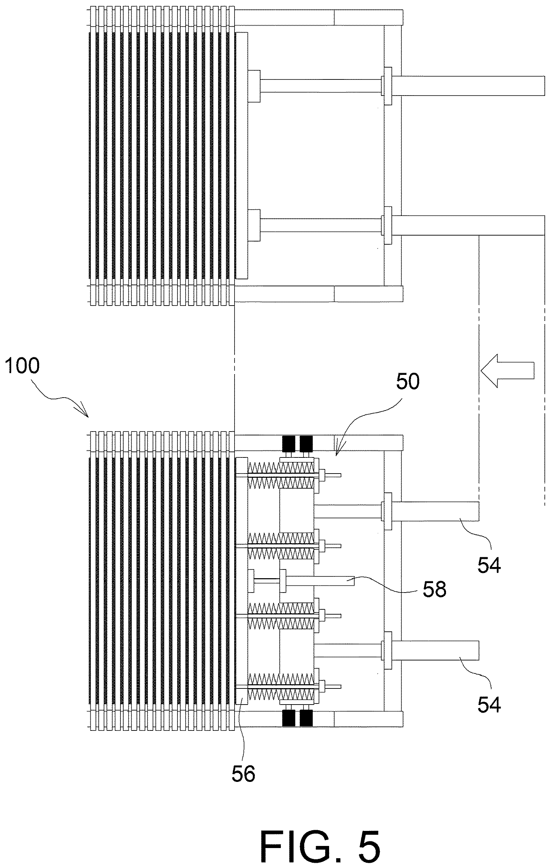

With the two-step movements of the pressure plate 56 according to the present invention, the working length of the main actuator 54 can significantly be shortened compared to the conventional, single-stage movement of the pressure plate 56. This is clear from FIG. 5. The upper image in this figure shows a conventional hydraulic tightening apparatus that moves the pressure plate only with the main actuator. In contrast, the lower image in the figure shows the hydraulic tightening apparatus 50 according to the invention, in which the pressure plate 56 is moved by the sub-actuator 58 in addition to the main actuators 54. The present invention obviously reduces the length of the main actuators 54, allowing significant space saving on the front side of the electrolysis 100. Furthermore, since the sub-actuator 58 does not substantially contribute to cell compression, as described above, the sub-actuator 58 can be employed at low cost.

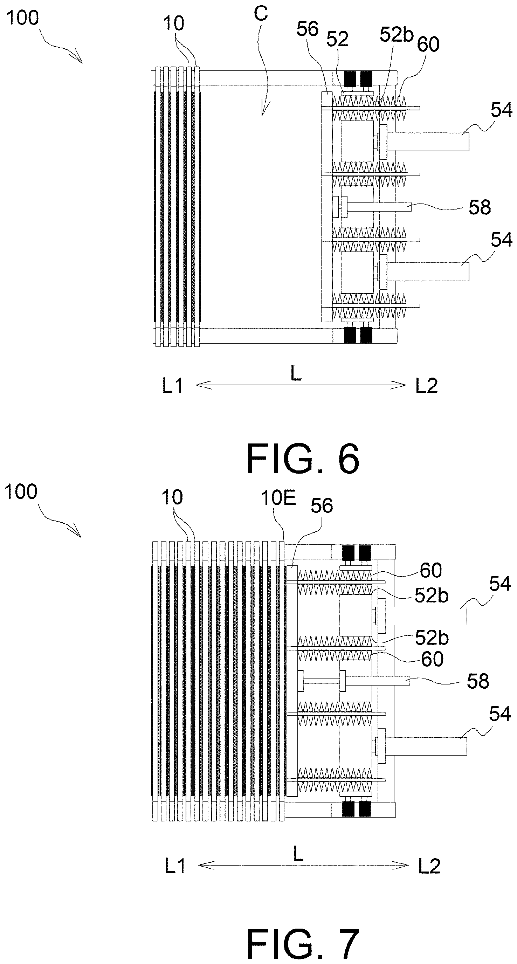

Referring now to FIGS. 6-9 and FIG. 2, cell "close" procedures will be described. In FIG. 6, both the pressure plate 56 and the movable member 52 are in the retracted position in the second direction L2. There may be a clearance C between the pressure plate 56 and the frontmost cell for further cell installation. The proximal ends of the compressible means 60 thereby protrude from the openings 52b of the movable member 52 in the second direction L2. The compressive means 60 are thus deactivated.

In FIG. 7 some additional cells 10 are installed into the clearance C, for example from above the electrolyser 100. The pressure plate 56 is then moved by the sub-actuator 58 towards the proximal or frontmost cell 10E. It should be noted that substantially no compressive force is applied to the cells 10 by the sub-actuator 58. Preferably, the pressure plate 56 is moved until the proximal ends of the compressible means 60 (i.e., springs 60a) is no longer protrude from the openings 52b of the movable member 52.

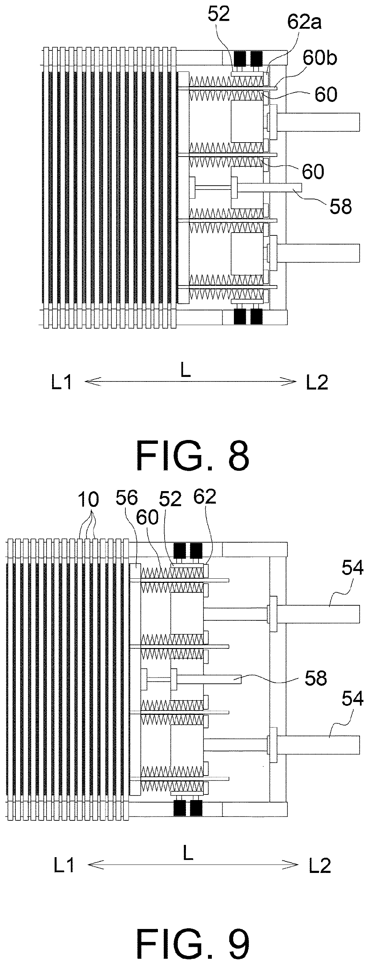

In FIG. 8, the backing plate 62a as the transmission means 62 is attached to the movable member 52 so that the backing plate 62a receives the proximal ends of the compressible means 60. The compressive means 60 are thus activated. The centre rods 60b of the compressible means 60 protrude from the holes provided in the backing plates 62a. Preferably during the attachment of the backing plate 62a, the sub-actuator 58 remains "ON" (i.e., the pressure of the hydraulic cylinder of the sub-actuator 58 is kept) so as to prevent the pressure plate 56 from moving back in the second direction L2 due to backlash.

In FIG. 9, the movable member 52 is moved again in the first direction L1 towards the pressure plate 56 whilst compressing the compressible means 60 with the aid of the main actuators 54 via the transmission means 62. During this time, the sub-actuator 58 operates so as not to hinder the movement of the movable member 52. If the sub-actuator 58 is a hydraulic cylinder, the fluid in the cylinder is released. To this end, the hydraulic line is preferably switched from the sub actuator 58 to the main actuators 54. If the sub-actuator 58 is an electro-mechanical actuator, the sub-actuator 58 may be driven in reverse (backward movement). Each main actuator 54 may be configured to stop moving the movable member 52 when a predetermined pressure is applied between the respective adjacent cells 10. If the main actuator 54 is composed of a hydraulic cylinder, this can be detected through the cylinder pressure. Alternatively or additionally, one or more pressure sensors may be provided on the pressure plate 56 and/or the support plate 108.

As shown in FIG. 2, locking means (e.g., nuts) 64 on the respective centre rods 60b of the compressible means 60 are tightened to retain the compressible means 60 accumulating the pressure. It is preferable that the locking means 64 are attached before compressing the compressible means 60, because if the locking means 64 are attached after compressing the compressible means 60, compressible means 60 may expand due to the decrease in thickness of the gasket used in the cell unit over time. The main function of the locking means 64 are to retain the compressible means 60, especially in the opening procedure.

Since the pressure generated from the main actuators 54 is first accumulated in the compressible means 60 and then applied to the pressure plate 56, good sealing is ensured even if the gaskets between the cells 10 are deformed due to aging or the like. In other words, there is no need for the main actuators 54 to periodically compensate for potential decrease in inter-cell distance. In contrast, the conventional hydraulic tightening systems may require periodic adjustments by the hydraulic cylinders to compensate for the decreased inter-cell distance due to aging of gaskets or the like.

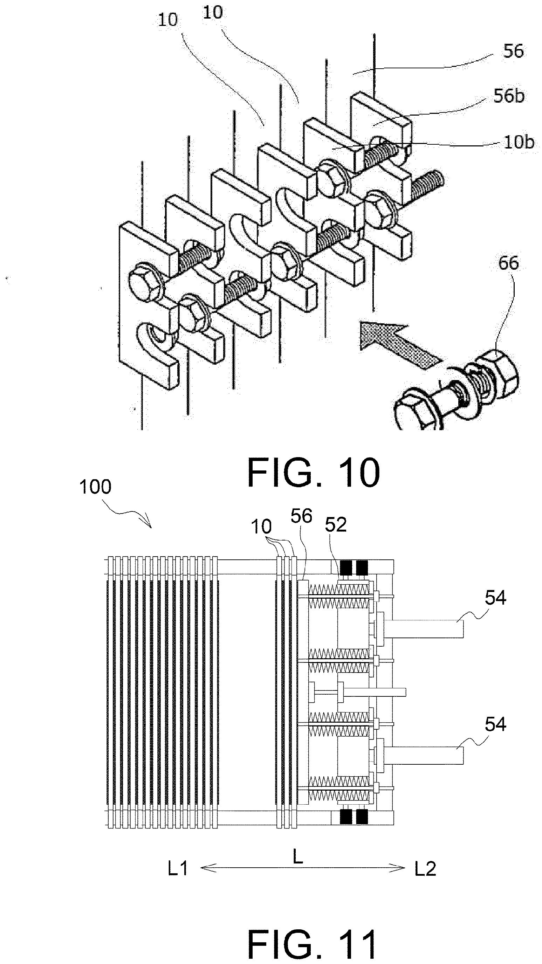

Referring to FIGS. 10 to 13, cell "partially open" procedures will be described. In FIG. 10, the pressure plate 56 and at least one electrolysis cell 10 are interconnected with each other by any means. In one example, each cell 10 and the pressure plate 56 are provided with lugs 10b, 56b on which fasteners 66, such as bolts and nuts, can be attached. Alternatively, bundles may be used to bundle the pressure plate 56 and some cells 10 together (not shown).

In FIG. 11, the movable member 52 is moved in the second direction L2 along with the pressure plate 56 and some cells 10 connected thereto using the main actuators 54. This partially opens the electrolyser 100 to create a clearance C, allowing replacement or addition of electrolysis cells 10.

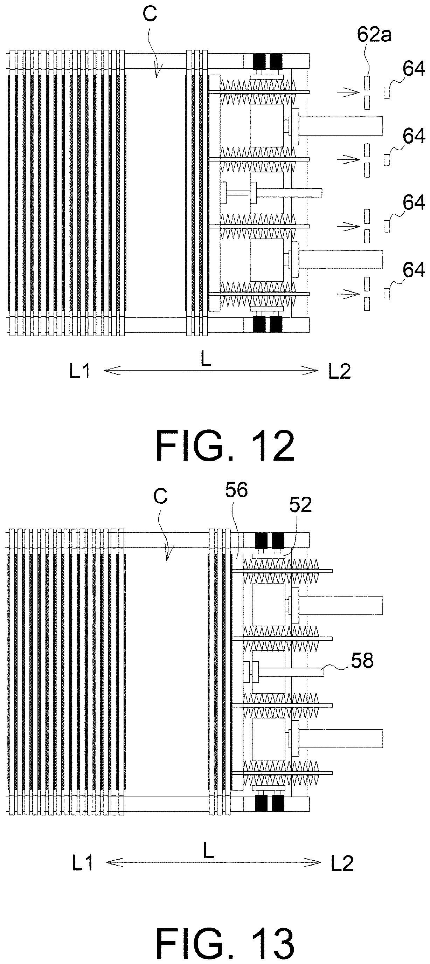

In FIG. 12, the locking means 64 and the backing plate 62a are removed. The compressible means are thus deactivated.

In FIG. 13, the pressure plate 56 is moved further in the second direction L2 and towards the movable member 52 using the sub-actuator 58. This creates further clearance C between the partially opened cells 10.

According to an embodiment of the present invention, a method of retroactively applying the tightening apparatus 50 according to the present invention to an existing filter press type electrolyser is provided. The existing electolyser comprises an existing frame and an existing pressure plate. The method comprises extending the frame (see, the section with dotted pattern in FIG. 2), and mounting the main body of the at least one main actuator 54 on the extended frame section 102a. Preferably, the existing pressure plate is reused as the pressure plate 56 or the movable member 52 of the tightening apparatus 50 according to the present invention.

### Reference sign list

- 10: electrolysis cell
- 50: tightening apparatus
- 52: movable member
- 54: main actuator
- 56: pressure plate
- 58: sub-actuator
- 60: compressible means
- 62: transmission means
- 64: locking means
- 100: electrolyser

## Claims

1. A tightening apparatus (50) for selectively opening and closing respective adjacent electrolysis cells (10) arranged in series in an electrolyser (100); comprising:
a movable member (52) moveable in a first direction (L1) and a second direction (L2), the first direction (L1) being a direction in which the cells (10) are to be closed each other and the second direction (L2) being an opposite direction to the first direction (L1);
at least one main actuator (54) configured to move the movable member (52) selectively in the first and second directions (L1, L2);
a pressure plate (56) arranged on the first direction (L1) side with respect to the movable member (52); and
a sub-actuator (58) configured to move the pressure plate (56) selectively in the first and second directions (L1, L2) with respect to the movable member (52).

2. The tightening apparatus (50) according to claim 1, further comprising a compressible means (60) arranged between the pressure plate (56) and the movable member (52),
wherein the compressible means (60) is compressible by the movable member (52) with an aid of the at least one main actuator (54) so as to accumulate pressure and apply in turn said pressure to the pressure plate (56),
preferably, wherein the compressible means (60) comprises a spring, preferably a belleville spring (60a).

3. The tightening apparatus (50) according to claim 2, further comprising a transmission means (62) configured to transmit force from the movable member (52) to the compressible means (60),
preferably, wherein the transmission means (62) is detachably attached to the movable member (52).

4. The tightening apparatus (50) according to claim 2 or 3, further comprising a locking means (64) for retaining the compressible means (60) in an opening procedure.

5. The tightening apparatus (50) according to any one of claims 1 to 4, wherein the at least one main actuator (54) comprises a hydraulic cylinder,
preferably, wherein the sub-actuator (58) comprises a hydraulic cylinder,
more preferably, wherein an inner diameter of the hydraulic cylinder of the sub-actuator (58) is smaller than an inner diameter of the hydraulic cylinder of the main actuator (54).

6. The tightening apparatus (50) according to any one of claims 1 to 5, wherein, when the compressible means (60) is compressed by the movable member (52) with the aid of the main actuator (54), the sub-actuator (58) operates so as not to hinder the movement of the movable member (52) with respect to the pressure plate (56).

7. The tightening apparatus (50) according to any one of claims 1 to 6, comprising two main actuators (54),
preferably, wherein the sub-actuator (58) is positioned between the two main actuators (54) in planar view.

8. An electrolyser (100), comprising:
a plurality of electrolysis cells (10) arranged in series; and
a tightening apparatus (50) according to any one of claims 1 to 7, configured to apply pressure between the respective adjacent electrolysis cells (10).

9. The electrolyser (100) according to claim 8, wherein the electrolysis cells (10) are bipolar electrolysis cells,
preferably, wherein the electrolyser (100) is a zero-gap electrolyer in which an anode electrode and a cathode electrode are spatially separated only by a gas separator.

10. A method of closing respective adjacent electrolysis cells (10) in an electrolyser (100), using a tightening apparatus (50) according to any one of claims 1 to 7, comprising:
moving the pressure plate (56) in the first direction (L1) using the sub actuator (58); and
moving the movable member (52) in the first direction (L1) using the at least one main actuator (54).

11. The method according to claim 10, wherein the moving the pressure plate (56) including moving the pressure plate (56) to a position where the pressure plate (56) contacts, but does not pressurise, a proximity cell of the electrolysis cells (10).

12. The method according to claim 10 or 11, wherein the tightening apparatus (50) comprises a compressible means (60) according to claim 2, wherein the moving the movable member (52) in the first direction (L1) using the at least one main actuator (54) including moving the movable member (52) in the first direction (L1) using the at least one main actuator (54) whilst compressing the compressible means (60) such that the compressible means (60) accumulates pressure and apply in turn said pressure to the pressure plate (56),
preferably, the method further comprises retaining the compressible means (60) in its compressed state.

13. A method of opening adjacent electrolysis cells (10) in an electrolyser (100), using a tightening apparatus (50) according to any one of claims 1 to 7, comprising:
interconnecting the pressure plate (56) and at least one electrolysis cell (10) with each other;
moving the movable member (52) in the second direction (L2) along with the pressure plate (56) and the least one electrolysis cell (10) connected thereto using the at least one main actuator (54); and
moving the pressure plate (56) in the second direction (L2) and towards the movable member (52) using the sub-actuator (58).

14. A method of retroactively applying a tightening apparatus (50) according to any one of claims 1 to 7 to an existing filter press type electrolyser comprising an existing frame and an existing pressure plate, comprising:
extending the frame; and
mounting a main body of the at least one main actuator (54) on the extended frame section.

15. The method according to claim 14, wherein
the existing pressure plate is reused as the pressure plate (56) or the movable member (52) as recited in any one claims 1 to 7.
